# EUROPEAN PATENT SPECIFICATION

(11) **EP 2 257 206 B1**
(45) Date of publication and mention of the grant of the patent: **07.09.2011**
(21) Application number: 09713891.1
(22) Date of filing: 26.02.2009
(51) Int. Cl.: A47J 31/40

(54) **BEVERAGE VENDING MACHINE MIXER ASSEMBLY**
MISCHVORRICHTUNGSANORDNUNG FÜR EINE GETRÄNKEVERKAUFSMASCHINE
ENSEMBLE DE MÉLANGE DE DISTRIBUTEUR AUTOMATIQUE DE BOISSONS

(30) Priority: 28.02.2008 IT TO20080138
(43) Date of publication of application: 08.12.2010
(73) Proprietor: N&W Global Vending S.p.A., 24030 Valbrembo (Bergamo) (IT)
(72) Inventor: SIRBU VILLA, Dan, Alexie, 24040 Bonate Sotto (IT)
(74) Representative: Jorio, Paolo
(86) International application number: PCT/IB2009/000343
(87) International publication number: WO 2009/106955

(56) References cited:
- WO-A-03/041546
- WO-A-03/082066
- US-A- 4 185 927
- US-A1- 2005 079 265
- US-B1- 6 325 117

## Description

### TECHNICAL FIELD

The present invention relates to a beverage vending machine mixer assembly.

### BACKGROUND ART

Vending machine mixer assemblies normally comprise a removable part defined by a mixer normally comprising a normally truncated-cone-shaped vertical hollow body with a top inlet for normally powdered soluble material. The hollow body has an inner mixing chamber that communicates at the top with the inlet, and laterally with a water supply circuit, and with a connecting body housing a condensation cell and projecting radially outwards from the hollow body to connect the mixing chamber to a suction device for extracting fumes from the mixing chamber.

The hollow body normally communicates at the bottom with an outflow conduit comprising a first portion coaxial with the hollow body and communicating directly with the mixing chamber; and a second portion extending radially from the bottom end of the second portion along an axis parallel to the connecting body, and communicating with a beverage outflow pipe.

Inside, the second portion of the outflow conduit normally defines a blending chamber, which communicates on one side with the outflow pipe and the mixing chamber, and on the other side, at its free end, has an inlet for an impeller of a blender comprising an electric motor, the output shaft of which is fitted with the impeller.

Known mixer assemblies of the above type normally also comprise a fixed part defined by a supporting body, which is connected integrally to a fixed, normally vertical wall of the machine, is connected removably by a connecting device to the free end of the second portion of the mixer outflow conduit, and defines an interface between the connecting body of the mixer and the water supply circuit and fume extraction suction device.

The supporting body also supports the electric motor of the blender, and is fitted through with the output shaft of the motor fitted with the impeller.

Mixer assemblies of the above type are normally serviced and cleaned frequently, which means operating the connecting device to disconnect and reconnect the removable part from and to the fixed part.

In this connection, it is known, for example from US2005079265A1, to provide a connecting device comprising an intermediate member having a first horizontal axis; and a first and second bayonet joint for connecting the intermediate member removably to the supporting body on one side, and to the mixer on the other; each bayonet joint comprising at least one lock tooth, and a respective retaining track having an insertion opening for the respective lock tooth; the lock tooth of the second bayonet joint being carried by the mixer and having a fixed second horizontal axis parallel to the first axis.

The major drawback of the known mixer assemblies of the above type is that, during disconnect and reconnect operations, the intermediate member and the mixer are to be handled together, which renders these operations difficult and time consuming.

### DISCLOSURE OF INVENTION

Since this job must be made as straightforward as possible to minimize downtime of the machine and avoid subjecting the mixer to undue stress, it is an object of the present invention to provide a beverage vending machine mixer assembly of the type described, which is cheap and easy to produce and can be disassembled and assembled quickly and easily.

According to the present invention, there is provided a beverage vending machine mixer assembly as claimed in Claim 1 and preferably in any one of the following Claims depending directly or indirectly on Claim 1.

### BRIEF DESCRIPTION OF THE DRAWINGS

A non-limiting embodiment of the present invention will be described by way of example with reference to the accompanying drawings, in which:
Figure 1 shows an exploded view in perspective of a preferred embodiment of the mixer assembly according to the present invention;
Figures 2 and 3 show views in perspective of the Figure 1 mixer assembly partly assembled and fully assembled respectively;

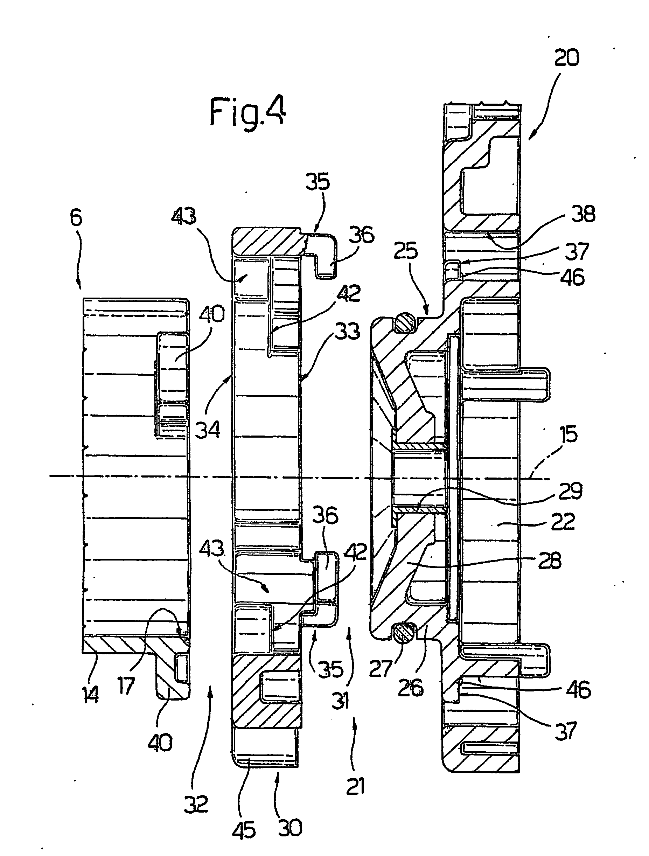

Figure 4 shows a larger-scale, exploded radial section of a detail in Figure 1;
Figure 5 shows a front view of a detail in Figure 2;
Figure 6 shows a front view of a detail in Figure 3;

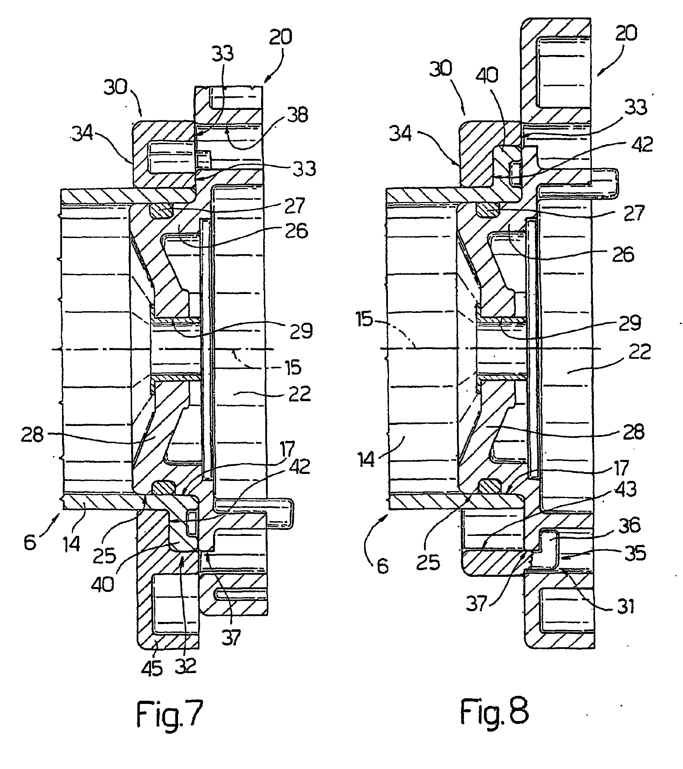

Figures 7 and 8 show radial sections along respective lines VII-VII and VIII-VIII in Figure 6.

### BEST MODE FOR CARRYING OUT THE INVENTION

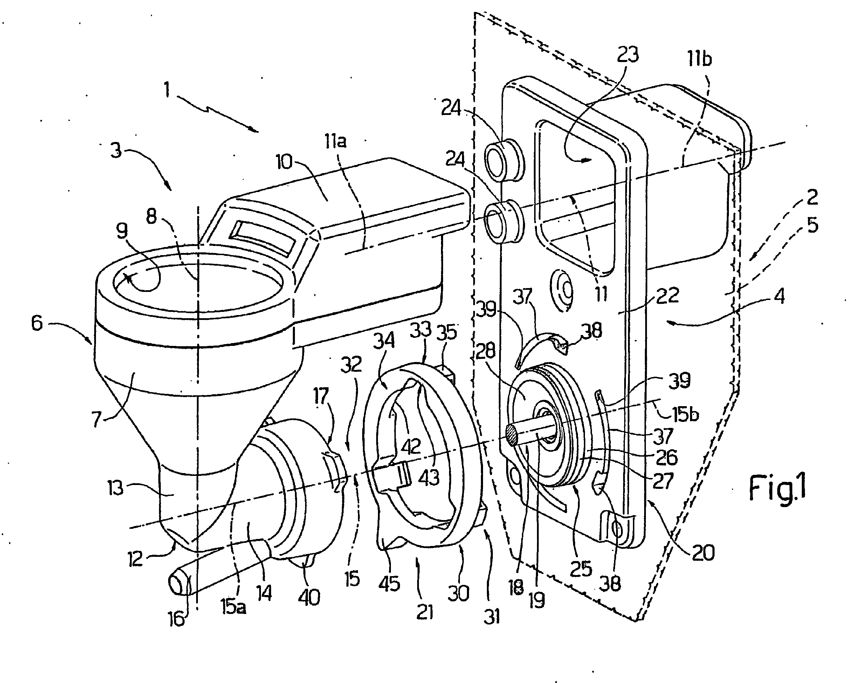

Number 1 in Figures 1 to 3 indicates as a whole a mixer assembly for a beverage vending machine 2.

Mixer assembly 1 comprises a removable part 3; and a fixed part 4 connected integrally to a fixed, normally vertical wall 5 of machine 2.

Removable part 3 comprises a mixer 6 in turn comprising a normally truncated-cone-shaped hollow body 7 having a vertical axis 8, and a top inlet 9 for normally powdered soluble material. Hollow body 7 has an inner mixing chamber (not shown), which has two lateral water inlets (not shown) and communicates at the top with inlet 9, and laterally with a connecting body 10 housing a known condensation cell not shown. Connecting body 10 is rectangular-parallelepiped-shaped, and projects radially outwards of hollow body 7 along an axis 11a, radial with respect to axis 8, to connect the mixing chamber to a suction device (not shown) for extracting fumes from the mixing chamber.

Hollow body 7 communicates at the bottom with an outflow conduit 12 having a portion 13 coaxial with axis 8 and communicating directly at one end with the mixing chamber (not shown), and at the other end with a cylindrical portion 14 extending radially from the bottom end of portion 13 along an axis 15a parallel to axis 11a.

Inside, portion 14 of outflow conduit 12 defines a blending chamber (not shown), which communicates centrally with an outflow pipe 16, communicates on one side with the mixing chamber (not shown) via portion 13, and, on the other side, at the free end of portion 14, has a circular inlet 17 for an impeller (not shown for the sake of simplicity) of a known blender 18 forming part of fixed part 4 and comprising an electric motor (not shown), the drive shaft 19 of which is fitted with the impeller (not shown).

Dimensionally, inlet 17 of portion 14 is closer to axis 8 than the free end of connecting body 10.

Fixed part 4 comprises a supporting body 20 which is connected integrally to wall 5 of machine 2, is connected removably and in fluidtight manner by a connecting device 21 to the free end of portion 14 of outflow conduit 12 of mixer 6, and defines an interface between mixer 6 and the water supply device (not shown) and fume extraction suction device (not shown).

Supporting body 20 also supports the electric motor (not shown) of blender 18, and is fitted through with drive shaft 19 fitted with the impeller (not shown).

Supporting body 20 comprises a substantially rectangular plate 22 fixed to wall 5 by a known fastening device (not shown), and having a rectangular-parallelepiped-shaped top cavity 23, which is connected to a known suction device (not shown), extends along an axis 11b perpendicular to plate 22, and is sized crosswise to receive connecting body 10 in axially sliding and angularly fixed manner. In other words, cavity 23 forms a prismatic guide which, when engaged by connecting body 10 with its axis 11a coaxial with axis 11b to form one axis 11, locks mixer 6 angularly about axis 11.

On one side of cavity 23, plate 22 has two through fittings 24, which connect removably at the front to respective water inlets (not shown) formed in hollow body 7.

Below cavity 23, plate 22 has a cylindrical appendix 25 having an axis 15b and projecting towards mixer 6 from plate 22. The distance between axes 11a and 15a equals the distance between axes 11b and 15b; and appendix 25 comprises a cylindrical lateral wall 26, which has an outer annular groove housing a seal 27, and has an outside diameter approximately equal to but no larger than the inside diameter of portion 14 of outflow conduit 12. The end of appendix 25 facing mixer 6 is closed by an end wall 28, through which is formed a hole 29 coaxial with axis 15b and engaged in rotary manner by drive shaft 19 of blender 18, the motor (not shown) of which is fitted to plate 22, on the opposite side of plate 22 to mixer 6.

Connecting device 21 connects mixer 6 to supporting body 20 when connecting body 10 is positioned along axis 11 and engages cavity 23, when axis 15a of portion 14 is coaxial with axis 15b to form one axis 15, and when inlet 17 of portion 14 is fitted in fluidtight manner onto appendix 25.

Connecting device 21 comprises an intermediate annular member 30 coaxial with axis 15; and two bayonet joints 31 and 32. Bayonet joint 31 connects intermediate annular member 30 releasably to supporting body 20; and bayonet joint 32 connects mixer 6 releasably to intermediate annular member 30.

Intermediate annular member 30 is bounded by two opposite annular flat surfaces 33 and 34. Surface 33 faces plate 22, has an inside diameter approximately equal to but no smaller than the outside diameter of portion 14 of outflow conduit 12, and, in the work position, is fitted onto the end of portion 14.

Bayonet joint 31 comprises three lock teeth 35 equally spaced about axis 15. Obviously, lock teeth 35 may be other than three in number, and even only one lock tooth 35 may be sufficient.

Each lock tooth 35 is L-shaped, extends axially from surface 33, and has an end lock portion 36 facing axis 15. A retaining slot or track 37 on plate 22 corresponds with each lock tooth 35, and has an insertion opening 38 at one end for respective lock tooth 35. Each track extends in an arc about axis 15b (anticlockwise in Figure 1, from respective insertion opening 38), and is bounded, at the opposite end to respective insertion opening 38, by a stop surface 39 located radially with respect to axis 15b. Each lock tooth 35 is long enough for its end portion to engage a rear surface of plate 22, once lock tooth 35 is inserted inside respective insertion opening 38 and annular member 30 is rotated about axis 15b.

Bayonet joint 32 comprises three lock teeth 40 equally spaced about axis 15a. Obviously, in this case too, lock teeth 40 may be other than three in number, and even only one lock tooth 40 may be sufficient.

Each lock tooth 40 is defined by an appendix projecting radially outwards from the free end of portion 14 of outflow conduit 12, and having a substantially barycentric axis 41 parallel to axis 15a. A retaining track 42 on intermediate annular member 30 corresponds with each lock tooth 40, is defined by a groove formed along the inner periphery of surface 33, and has an insertion opening 43 at one end for respective lock tooth 40. Each insertion opening 43 is defined by an axial groove having an axis 44 parallel to axis 15, and formed along a cylindrical inner surface of intermediate annular member 30, preferably (as in the embodiment shown), but not necessarily, in line with a respective lock tooth 35. Each retaining track 42 extends about axis 15 in the same direction as, but along a shorter arc than, retaining tracks 37.

Assembly of mixer assembly 1, i.e. connection of mixer 6 to supporting body 20, will now be described as of the detached position shown in Figure 1.

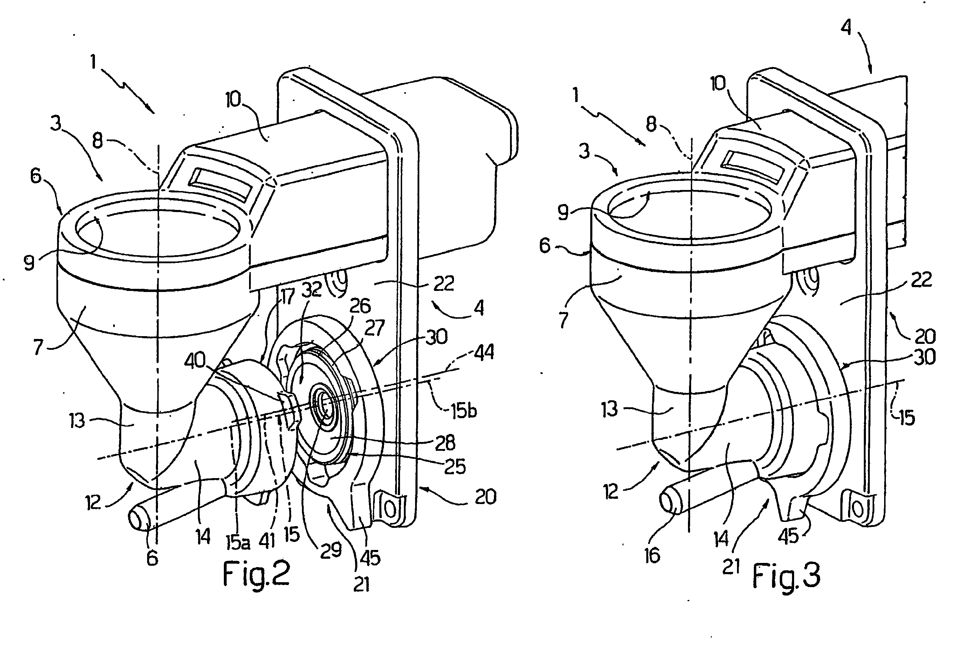

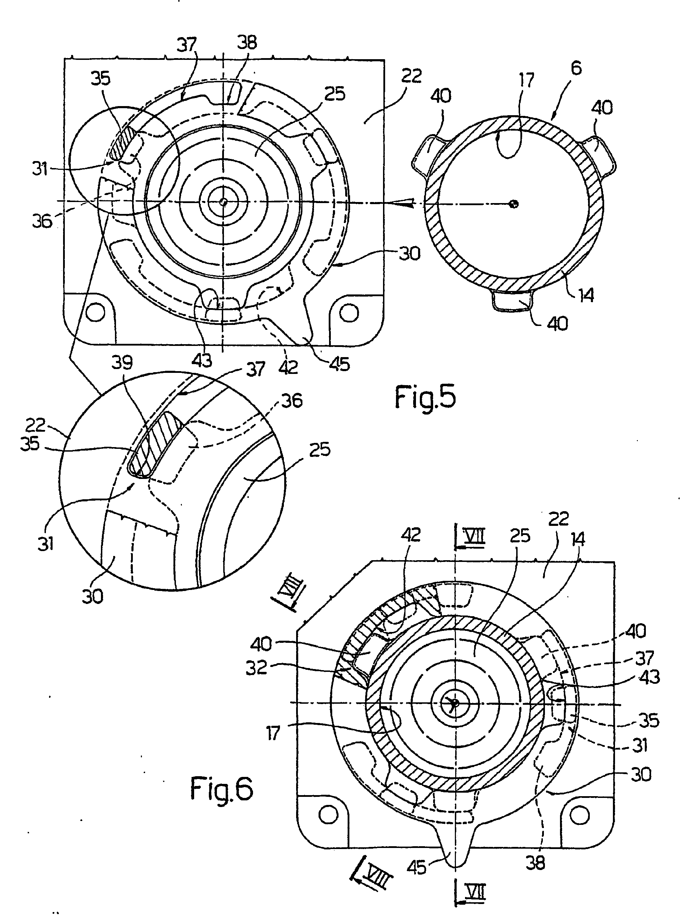

As of the detached position, intermediate annular member 30 is positioned facing plate 22, so that lock teeth 35 of bayonet joint 31 are aligned with respective insertion openings 38; intermediate annular member 30 is then first moved along axis 15b to insert lock teeth 35 through respective insertion openings 38, and then rotated (anticlockwise in Figure 1) about axis 15b to move joint 31 into the fully locked position (Figures 2 and 5) with lock teeth 35 laterally contacting respective stop surfaces 39 (Figure 5).

Mixer 6 is then moved towards supporting body 20 to insert connecting body 10 inside cavity 23 and lock mixer 6 angularly about axis 11 and so lock axes 41 of lock teeth 40 of bayonet joint 32 in position.

Retaining tracks 37 of bayonet joint 31 are located about axis 15b and made long enough so that, when bayonet joint 31 is fully locked and connecting body 10 is inserted inside cavity 23, axes 41 of lock teeth 40 are locked in respective positions coaxial with axes 44 of respective insertion openings 43. Consequently, by simply pushing mixer 6 towards plate 22, connecting body 10 fully engages cavity 23 on one side, and, on the other, each lock tooth 40 engages respective insertion opening 43 to insert appendix 25 fully inside portion 14 of outflow conduit 12.

At this point, using an outer radial appendix 45 on intermediate annular member 30, intermediate annular member 30 (Figures 3 and 6) is rotated (clockwise in Figure 6) about axis 15 to lock bayonet joint 32 without releasing bayonet joint 31.

Because retaining tracks 42 are much shorter than retaining tracks 37 - roughly half the length, in the example shown - intermediate annular member 30 need simply be rotated to fully lock bayonet joint 32 and so position lock teeth 35 substantially halfway along retaining tracks 37. During this operation, the user is made aware of the position of lock teeth 35 along respective retaining tracks 37 by means of bosses 46 located along retaining tracks 37, and which interact with lock teeth 35 as the user rotates intermediate annular member 30 (clockwise in Figure 6) using radial appendix 45.

Mixer 6 is detached from supporting body 20 by performing the above assembly operations in reverse.

As will be clear from the above description, by making axes 41 coaxial with respective axes 44 before locking joint 32 and by simply fully locking bayonet joint 31 (into a position easily identifiable by the user), assembly of mixer assembly 1 can be completed relatively quickly, and with no need to adjust the angular position of intermediate annular member 30 before inserting lock teeth 40.

## Claims

1. A mixer assembly for a beverage vending machine (2), the mixer assembly (1) comprising a supporting body (20); a mixer (6) in turn comprising a normally truncated-cone-shaped hollow body (7) having an axis (8); and connecting means (21) for connecting the mixer (6) removably to the supporting body (20); the connecting means (21) comprising an intermediate member (30) having a first horizontal axis (15); and a first and second bayonet joint (31, 32) for connecting the intermediate member (30) removably to the supporting body (20) on one side, and to the mixer (6) on the other; each bayonet joint (31; 32) comprising at least one lock tooth (35; 40), and a respective retaining track (37; 42) having an insertion opening (38; 43) for the respective lock tooth (35; 40); the lock tooth (40) of the second bayonet joint (32) being carried by the mixer (6) and having a fixed second horizontal axis (41) parallel to the first axis (15); the mixer assembly (1) being **characterized in that** the insertion opening (43) of the second bayonet joint (32) is coaxial with the second axis (41) when the intermediate member (30) is set to a limit position fully locking the first bayonet joint (31) and the axis (8) of the hollow body (7) is in a vertical position.

2. A mixer assembly as claimed in Claim 1, and comprising coupling means (10, 23) for locking the mixer (6), together with the second axis (41), angularly about the first axis (15) with the axis (8) of the hollow body (7) in the vertical position.

3. A mixer assembly as claimed in Claim 1 or 2, wherein the mixer (6) comprises a tubular member (14) coaxial with the first axis (15) and having a free end with an inlet (17); the lock tooth (40) of the second bayonet joint (32) being carried by the tubular member (14), at said free end.

4. A mixer assembly as claimed in Claim 3, wherein the supporting body (20) has an appendix (25) coaxial with the first axis (15), and which is inserted through the inlet (17) into the tubular member (14) in fluidtight and removable manner; said intermediate member (30) axially locking the tubular member (14) onto the appendix (25) of the supporting body (20) by means of said first and second bayonet joint (31, 32).

5. A mixer assembly as claimed in Claim 4, wherein the appendix (25) is cup-shaped, and is closed at its free end by an end wall (28).

6. A mixer assembly as claimed in one of the foregoing Claims, wherein the intermediate member (30) is an annular member having the retaining track (42) of the second bayonet joint (32) and the lock tooth (35) of the first bayonet joint (31).

7. A mixer assembly as claimed in Claims 3 and 6, wherein the annular intermediate member (30) has an inside diameter approximately equal to but no smaller than an outside diameter of the tubular member (14).

8. A mixer assembly as claimed in Claim 7, wherein the retaining track (42) of the second bayonet joint (32) is defined by a groove formed along the inner periphery of a surface (33) of the intermediate member (30) facing the supporting body (20).

9. A mixer assembly as claimed in Claim 7, wherein the insertion opening (43) of the second bayonet joint (32) is defined by an axial groove formed along an inner surface of the intermediate member (30).

10. A mixer assembly as claimed in one of Claims 4 to 9, wherein the retaining track (37) of the first bayonet joint (31) is defined by a slot formed through the supporting body (20) and about the first axis (15).

11. A mixer assembly as claimed in one of the foregoing Claims, wherein the lock tooth (40) of the second bayonet joint (32) comprises an appendix extending from the mixer (6) and radially with respect to the first axis (15).

12. A mixer assembly as claimed in one of the foregoing Claims, wherein the lock tooth (35) of the first bayonet joint (31) comprises an L-shaped appendix, of which a first portion extends axially from the intermediate member (30), and a second portion (36) extends from the first portion and radially with respect to the first axis (15).

13. A mixer assembly as claimed in one of the foregoing Claims, wherein the retaining track (42) of the second bayonet joint (32) is shorter than the retaining track (37) of the first bayonet joint (31).

14. A mixer assembly as claimed in one of the foregoing Claims, wherein each bayonet joint (31; 32) comprises a number of lock teeth (35; 40) equally spaced about the first axis (15); each lock tooth (35; 40) engaging a respective said retaining track (37; 42).

## Patentansprüche

1. Mischvorrichtungsanordnung für eine Getränkeverkaufsmaschine (2), wobei die Mischvorrichtungsanordnung (1) einen Tragkörper (20); eine Mischvorrichtung (6), die wiederum einen senkrecht kegelstumpfförmigen hohlen Körper (7) umfasst, der eine Achse (8) aufweist; und Verbindungsmittel (21) zum abnehmbaren Verbinden der Mischvorrichtung (6) mit dem Tragkörper (20) umfasst; wobei das Verbindungsmittel (21) ein Zwischenelement (30), das eine erste horizontale Achse (15) aufweist; und einen ersten und einen zweiten Bajonettverschluss (31, 32) zum abnehmbaren Verbinden des Zwischenelements (30) mit dem Tragkörper (20) auf einer Seite und mit der Mischvorrichtung (6) auf der anderen umfasst; wobei jeder Bajonettverschluss (31; 32) mindestens einen Verriegelungszahn (35; 40) und eine entsprechende Halteführung (37; 42) umfasst, die eine Einführöffnung (38; 43) für den entsprechenden Verriegelungszahn (35; 40) aufweist; wobei der Verriegelungszahn (40) des zweiten Bajonettverschlusses (32) durch die Mischvorrichtung (6) getragen wird und eine feste zweite horizontale Achse (41) aufweist, die parallel zur ersten Achse (15) ist; wobei die Mischvorrichtung (1) **dadurch gekennzeichnet ist, dass** die Einführöffnung (43) des zweiten Bajonettverschlusses (32) koaxial zur zweiten Achse (41) ist, wenn das Zwischenelement (30) auf eine Endstellung eingestellt ist, die den ersten Bajonettverschluss (31) vollständig verriegelt, und sich die Achse (8) des hohlen Körpers (7) in einer vertikalen Stellung befindet.

2. Mischvorrichtungsanordnung nach Anspruch 1, und umfassend Kopplungsmittel (10, 23) zum Verriegeln der Mischvorrichtung (6), zusammen mit der zweiten Achse (41), winklig um die erste Achse (15) mit der Achse (8) des hohlen Körpers (7) in der vertikalen Stellung.

3. Mischvorrichtungsanordnung nach Anspruch 1 oder 2, wobei die Mischvorrichtung (6) ein rohrförmiges Element (14) umfasst, das koaxial zur ersten Achse (15) ist und ein freies Ende mit einem Einlass (17) aufweist; wobei der Verriegelungszahn (40) des zweiten Bajonettverschlusses (32) an dem freien Ende durch das rohrförmige Element (14) getragen wird.

4. Mischvorrichtungsanordnung nach Anspruch 3, wobei der Tragkörper (20) einen Ansatz (25) aufweist, der koaxial zur ersten Achse (15) ist und auf flüssigkeitsdichte und abnehmbare Weise durch den Einlass (17) in das rohrförmige Element (14) eingeführt ist; wobei das Zwischenelement (30) das rohrförmige Element (14) mittels des ersten und des zweiten Bajonettverschlusses (31, 32) axial auf dem Ansatz (25) des Tragkörpers (20) verriegelt.

5. Mischvorrichtungsanordnung nach Anspruch 4, wobei der Ansatz (25) kelchförmig ist und an seinem freien Ende durch eine Endwand (28) geschlossen ist.

6. Mischvorrichtungsanordnung nach einem der vorhergehenden Ansprüche, wobei das Zwischenelement (30) ein ringförmiges Element ist, das die Halteführung (42) des zweiten Bajonettverschlusses (32) und den Verriegelungszahn (35) des ersten Bajonettverschlusses (31) aufweist.

7. Mischvorrichtungsanordnung nach Anspruch 3 und 6, wobei das ringförmige Zwischenelement (30) einen Innendurchmesser aufweist, der ungefähr gleich wie aber nicht kleiner als ein Außendurchmesser des rohrförmigen Elements (14) ist.

8. Mischvorrichtungsanordnung nach Anspruch 7, wobei die Halteführung (42) des zweiten Bajonettverschlusses (32) durch eine Rille abgegrenzt ist, die entlang des Innenumfangs einer Fläche (33) des Zwischenelements (30) gebildet ist, die dem Tragkörper (20) zugewandt ist.

9. Mischvorrichtungsanordnung nach Anspruch 7, wobei die Einführöffnung (43) des zweiten Bajonettverschlusses (32) durch eine axiale Rille abgegrenzt ist, die entlang einer Innenfläche des Zwischenelements (30) gebildet ist.

10. Mischvorrichtungsanordnung nach einem der Ansprüche 4 bis 9, wobei die Halteführung (37) des ersten Bajonettverschlusses (31) durch einen Schlitz abgegrenzt ist, der durch den Tragkörper (20) und um die erste Achse (15) gebildet ist.

11. Mischvorrichtungsanordnung nach einem der vorhergehenden Ansprüche, wobei der Verriegelungszahn (40) des zweiten Bajonettverschlusses (32) einen Ansatz umfasst, der sich von der Mischvorrichtung (6) und radial in Bezug zur ersten Achse (15) erstreckt.

12. Mischvorrichtungsanordnung nach einem der vorhergehenden Ansprüche, wobei der Verriegelungszahn (35) des ersten Bajonettverschlusses (31) einen L-förmigen Ansatz umfasst, von dem ein erster Abschnitt sich axial vom Zwischenelements (30) erstreckt und ein zweiter Abschnitt (36) sich vom ersten Abschnitt und radial in Bezug zur ersten Achse (15) erstreckt.

13. Mischvorrichtungsanordnung nach einem der vorhergehenden Ansprüche, wobei die Halteführung (42) des zweiten Bajonettverschlusses (32) kürzer ist als die Halteführung (37) des ersten Bajonettverschlusses (31).

14. Mischvorrichtungsanordnung nach einem der vorhergehenden Ansprüche, wobei jeder Bajonettverschluss (31; 32) eine Anzahl von Verriegelungszähnen (35; 40) umfasst, die gleichmäßig um die erste Achse beabstandet (15) sind; wobei jeder Verriegelungszahn (35; 40) in eine entsprechende Halteführung (37; 42) eingreift.

## Revendications

1. Ensemble mélangeur pour un distributeur de boissons (2), l'ensemble mélangeur (1) comprenant un corps de support (20) ; un mélangeur (6) comprenant à son tour un corps creux normalement de forme tronconique (7) ayant un axe (8) ; et des moyens de raccordement (21) pour raccorder le mélangeur (6) de manière amovible au corps de support (20) ; les moyens de raccordement (21) comprenant un élément intermédiaire (30) ayant un premier axe horizontal (15) ; et un premier et un deuxième joint à baïonnette (31, 32) pour raccorder l'élément intermédiaire (30) de manière libérable au corps de support (20) d'un côté, et au mélangeur (6) de l'autre ; chaque joint à baïonnette (31 ; 32) comprenant au moins une dent de blocage (35 ; 40), et un rail de retenue (37 ; 42) respectif ayant une ouverture d'insertion (38 ; 43) pour la dent de blocage (35 ; 40) respective ; la dent de blocage (40) du deuxième joint à baïonnette (32) étant supportée par le mélangeur (6) et ayant un deuxième axe horizontal fixe (41) parallèle au premier axe (15) ; l'ensemble mélangeur (1) étant **caractérisé en ce que** l'ouverture d'insertion (43) du deuxième joint à baïonnette (32) est coaxiale avec le deuxième axe (41) lorsque l'élément intermédiaire (30) est placé dans une position de limite bloquant complètement le premier joint à baïonnette (31) et l'axe (8) du corps creux (7) est dans une position verticale.

2. Ensemble mélangeur selon la revendication 1, et comprenant des moyens de couplage (10, 23) pour bloquer le mélangeur (6), conjointement avec le deuxième axe (41), de manière angulaire autour du premier axe (15) avec l'axe (8) du corps creux (7) dans la position verticale.

3. Ensemble mélangeur selon la revendication 1 ou 2, dans lequel le mélangeur (6) comprend un élément tubulaire (14) coaxial avec le premier axe (15) et ayant une extrémité libre avec une entrée (17) ; la dent de blocage (40) du deuxième joint à baïonnette (32) étant supportée par l'élément tubulaire (14), au niveau de ladite extrémité libre.

4. Ensemble mélangeur selon la revendication 3, dans lequel le corps de support (20) a un appendice (25) coaxial par rapport au premier axe (15), et qui est inséré par l'entrée (17) dans l'élément tubulaire (14) de manière étanche au fluide et amovible ; ledit élément intermédiaire (30) bloquant de manière axiale l'élément tubulaire (14) sur l'appendice (25) du corps de support (20) au moyen desdits premier et deuxième joints à baïonnette (31, 32).

5. Ensemble mélangeur selon la revendication 4, dans lequel l'appendice (25) est en forme de coupelle, et est fermé au niveau de son extrémité libre par une paroi d'extrémité (28).

6. Ensemble mélangeur selon l'une quelconque des revendications précédentes, dans lequel l'élément intermédiaire (30) est un élément annulaire ayant un rail de retenue (42) du deuxième joint à baïonnette (32) et la dent de blocage (35) du premier joint à baïonnette (31).

7. Ensemble mélangeur selon les revendications 3 et 6, dans lequel l'élément intermédiaire annulaire (30) a un diamètre interne approximativement égal mais non inférieur à un diamètre externe de l'élément tubulaire (14).

8. Ensemble mélangeur selon la revendication 7, dans lequel le rail de retenue (42) du deuxième joint à baïonnette (32) est défini par une rainure formée le long de la périphérie interne d'une surface (33) de l'élément intermédiaire (30) faisant face au corps de support (20).

9. Ensemble mélangeur selon la revendication 7, dans lequel l'ouverture d'insertion (43) du deuxième joint à baïonnette (32) est définie par une rainure axiale formée le long d'une surface interne de l'élément intermédiaire (30).

10. Ensemble mélangeur selon l'une quelconque des revendications 4 à 9, dans lequel le rail de retenue (37) du premier joint à baïonnette (31) est défini par une fente formée à travers le corps de support (20) et autour du premier axe (15).

11. Ensemble mélangeur selon l'une quelconque des revendications précédentes, dans lequel la dent de blocage (40) du deuxième joint à baïonnette (32) comprend un appendice s'étendant à partir du mélangeur (6) et radialement par rapport au premier axe (15).

12. Ensemble mélangeur selon l'une quelconque des revendications précédentes, dans lequel la dent de blocage (35) du premier joint à baïonnette (31) comprend un appendice en forme de L, dont une première partie s'étend de manière axiale à partir de l'élément intermédiaire (30), et une deuxième partie (36) s'étend à partir de la première partie et radialement par rapport au premier axe (15).

13. Ensemble mélangeur selon l'une quelconque des revendications précédentes, dans lequel le rail de retenue (42) du deuxième joint à baïonnette (32) est plus court que le rail de retenue (37) du premier joint à baïonnette (31).

14. Ensemble mélangeur selon l'une quelconque des revendications précédentes, dans lequel chaque joint à baïonnette (31 ; 32) comprend un certain nombre de dents de blocage (35 ; 40) espacées à égale distance autour du premier axe (15) ; chaque dent de blocage (35 ; 40) mettant en prise ledit rail de retenue (37 ; 42) respectif.
